# EUROPEAN PATENT APPLICATION

(11) **EP 1 489 544 A2**
(43) Date of publication of application: **22.12.2004**
(21) Application number: 04013268.0
(22) Date of filing: 04.06.2004
(51) Int. Cl.: G06F 17/60

(54) **Content distribution system for billing of copyright fees**

(30) Priority: 06.06.2003 US 456941
(71) Applicant: Boehnke, Norbert, 81825 München (DE)
(72) Inventor: Boehnke, Norbert, 81825 München (DE)
(74) Representative: Grünecker, Kinkeldey, Stockmair & Schwanhäusser Anwaltssozietät

(57) **Abstract**

Digital files are provided to users or to user terminals in control of the respective users, for example via the Internet or on suitable portable storage media. In order to use the content of a digital file, a user has to pay fees to the respective content owner or publisher of that file. The user may then create a copy of this digital file and distribute it to further users. After a user has purchased a digital file and then further distributed a copy of this digital file, he is then entitled to receive a portion of all fees that are paid by other users for this redistributed file.

## Description

### TECHNICAL FIELD

The described technology relates generally to the field of distribution of digital files, and more particularly to the distribution of digitally encoded files that have pending copyrights and thus pending royalties to be paid for using or accessing the respective contents of these digital files.

### BACKGROUND

Presently, the publishing industries such as music, video or software publishers and distributors, face the issue of how to prevent the unauthorized copying and distribution of digitally encoded content. Since the widespread use of the Internet and home PC's that are capable of copying and recording digital files on suitable storage media such as CD Rom, Audio-CD or DVD, unauthorized copying, sharing and distributing of digitally encoded content has become popular and convenient on a large scale for many mass market users.

Many concepts have been introduced to address this issue. On one hand, many proposed systems focus on the copying of digital files. These concepts try to prevent a consumer from copying a digital file and thus preventing unauthorized sharing or distributing thereof. This, however, poses a disadvantage for the legal consumer of such a file because he cannot copy this file for his personal use for instance as a backup. In addition, these systems typically require some sort of trusted devices that control not only the copying but also the use or rendering of these files, since access to the file's content also provides for recording and thus creating a copy. However, most proposed copy protection mechanisms can be deliberately and effectively bypassed. This might be done by obtaining a software program for removing the copy protection or by obtaining an unauthorized copy of the digital file, for instance through the Internet. On the other hand, digital rights management systems have been proposed to control not only the copying and the use of digital files but also the enforcement of pending royalties to the content owner. These systems provide for the copying of digital files while at the same time ensuring that all royalties are paid for the respective file. The problem of all these systems that address the issue of the unauthorized copying and distribution of digital files is that many users naturally disapprove of paying royalties for a digital file when it is at the same time possible to obtain such a file without paying fees, even though this would be illegitimate. Many of these potential consumers will see no benefit in paying these royalties and would either obtain an illegal copy or would not obtain the digital file despite their initial interest. This is naturally contrary to the publisher's or content owner's interests that are interested in providing a large number of users with their contents in order to create high total revenue. Thus, a system is desirable that is more accepted by consumers and creates a demand by consumers to obtain the digital files while respecting pending royalties to the content owner.

There is, therefore, a need for a system for preventing unauthorized copying and distribution of digitally encoded files which on one hand ensures the payment of the royalties for the content owner and on the other hand provides an apparent benefit or incentive for a user to adhere to the system and the pending royalties of digital files.

### SUMMARY

According to one aspect of the present invention, there is disclosed a system for distributing copyright protected digital files, whereby fees have to be paid for accessing or using said copyright protected digital files. The system comprises a plurality of user terminals and at least one content provider providing a copyright protected digital file to said plurality of user terminals via a network. The system further comprises a billing server for conducting a fee payment transaction for said fee in connection with the access or use of a copyright protected digital file, whereby a first user terminal or a first user initiates a first fee payment transaction, and whereby said first user terminal or said first user receives authorization to access or use a copyright protected digital file in return for the completion of said first fee payment transaction. The first user terminal or the first user provides said copyright protected digital file to a second of said plurality of user terminals or a second user after having received said authorization to access or use said copyright protected digital file. The second user terminal or the second user initiates a second fee payment transaction, whereby said second user terminal or said second user receives authorization to access or use said copyright protected digital file in return for the completion of said second fee payment transaction. In return for the completion of said first fee payment transaction, the first user terminal or the first user is entitled to receive a portion of the fee paid by said second user terminal or said second user via said second fee payment transaction.

According to a second aspect of the present invention, there is disclosed a method for distributing copyright protected digital files within a system, said system comprising at least one content provider and a plurality of user terminals, whereby a fee has to be paid for accessing or using said copyright protected digital files. The method comprises the following steps. A step of providing a copyright protected digital file to a first user terminal or a first user via a network. A step of initiating a first fee payment transaction with said billing server in connection with the access or use of said copyright protected digital file by said first user terminal or said first user. A step of receiving authorization to access or use said copyright protected digital file in return for the completion of said first fee payment transaction by said a first user terminal or said first user. A step of providing of said copyright protected digital file to a second user terminals or a second user by said first user terminal or said first user, after having received said authorization to access or use said copyright protected digital file. A step of initiating a second fee payment transaction with said billing server in connection with the access or use of said copyright protected digital file by said second user terminal or said second user, whereby said first user terminal or said first user is then entitled to receive a portion of said fee paid by said second user terminal or said second user.

According to a third aspect of the present invention, there is disclosed computer program for controlling a user terminal in a system, said system comprising at least one content provider and a plurality of user terminals, whereby a fee has to be paid for accessing or using a copyright protected digital files. The program controls the user terminal to perform the following steps. A step of receiving a copyright protected digital file. A step of establishing a connection to a billing server. A step of initiating a fee payment transaction with said billing server in connection with the access or use of said copyright protected digital file. A step of receiving authorization to access or use said copyright protected digital file in return for the completion of said first fee payment transaction. A step of providing of said copyright protected digital file to another of said plurality of user terminals, after having received said authorization to access or use said copyright protected digital file, whereby said user terminal is then entitled to receive a portion of a fee paid by said another user terminal or a corresponding user thereof.

### BRIEF DESCRIPTION OF THE DRAWINGS

Fig.1 is a network diagram of a user/server system according to the invention;

Fig. 2 illustrates a digital file and its components according to one embodiment of the present invention;

Fig. 3 is a diagram illustrating one example of a distribution chain of how a digital file is distributed by users according to the present invention;

Figs. 4a & 4b are a high level flowchart illustrating the basic flow for the provision of a digital file to one specific user as well as for other transactions related thereto;

Figs. 5a & 5b are exemplary diagrams illustrating the process of how the portions of a paid fee for each entitled user and the content owner are established.

### DETAILED DESCRIPTION

A system and method for distributing digital files, as well as a computer program for controlling a user terminal or an appropriate rendering device accordingly, is disclosed. Throughout this description, digital files in general refer to copyright protected contents comprised in these digital files, and thus might justify the term "copyright protected digital file." For the sake of intelligibility and conciseness in regard to the used wordings, only the term "digital file" is used.

Digital files are provided to users or to user terminals in control of the respective users, for example via the Internet or on suitable portable storage media. In order to use the content of a digital file, a user has to pay fees to the respective content owner or publisher of that file. The user may then create a copy of this digital file and distribute it to further users. After a user has purchased a digital file and then further distributed a copy of this digital file, he is then entitled to receive a portion of all fees that are paid by other users for this redistributed file. This concept ensures that fees are paid to the copyright owner of the digital file and at the same time creates a benefit or incentive for each user to participate in the system. Even though a user has to pay fees for all obtained digital files, he then also receives fees for all digital files he has provided to other users. The user therefore legally obtains a digital file as it would be the case in common digital right management systems but in addition has the chance that some potion of fees paid by other users are assigned to him. This will motivate users first to participate in the system and second to redistribute the obtained digital file to other users. This system is therefore also beneficial for the content provider or content owner, which are considered to be the copyright owner and/or publisher and thus naturally recipients of pending fees, since it provides for an effective and controlled distribution of digital files by using consumers as content distributors.

In the present invention, a digital file therefore comprises a file header specifying the content owner and all users entitled to a portion of the corresponding fee that is associated with the use of the file content. After a user or a terminal on his behalf has paid the respective fee, an identity associated to that user will be included to the file header before the file or a copy thereof is further distributed to other users. If a fee has been paid for the use of that redistributed copy of the original digital file, the respective amount is split between all entitled users and the content owner according to a predetermined approach. The provision of all users with an identity is established by an designated ID authority server in the system. The managing of the account balance of the users as well as the required billing and access authorization processes are also performed by appropriate servers in the system. These billing and access authorization transactions as well as account balance information transactions and the provision and/or the acknowledgement of identities for each user may be entirely without costs for the users.

Additional objectives, features and advantages of the invention are set forth in the following description. Both the above general description and the following detailed description are rather exemplary and not meant to be exhaustive but are intended to provide further explanation of the invention as claimed.

In the following a detailed description of different embodiments of the present invention is given, whereby reference is made to accompanying drawings which form a part thereof.

A system and method for controlling use and distribution of digital files is disclosed. The present invention is particularly directed towards a controlling of the copying or duplicating and a succeeding re-distribution of commercially distributed music and video files among private consumers. The present invention is therefore directed to support a mass distribution of digital audio and video files among a large number of users via electronic media such as the Internet. Other conceivable media that are suitable and supported by the present invention for a file provision and distribution are portable storage media such as optical discs, for example CD-ROM or DVD, or wireless connections like 3G wireless networks. These examples are not meant to be exhaustive and limiting but in contrast are meant to demonstrate the variety of possible transmission media.

This invention provides for a controlled commercial distribution or provision of digital files according to which not only the content provider or content owner but also the recipient or user of a digital file may further copy and re-distribute it. Nevertheless, the system and method according to the present invention accounts for the enforcement of fees that have to be paid to the content owner for using the file content even after it has been copied and re-distributed by a consumer.

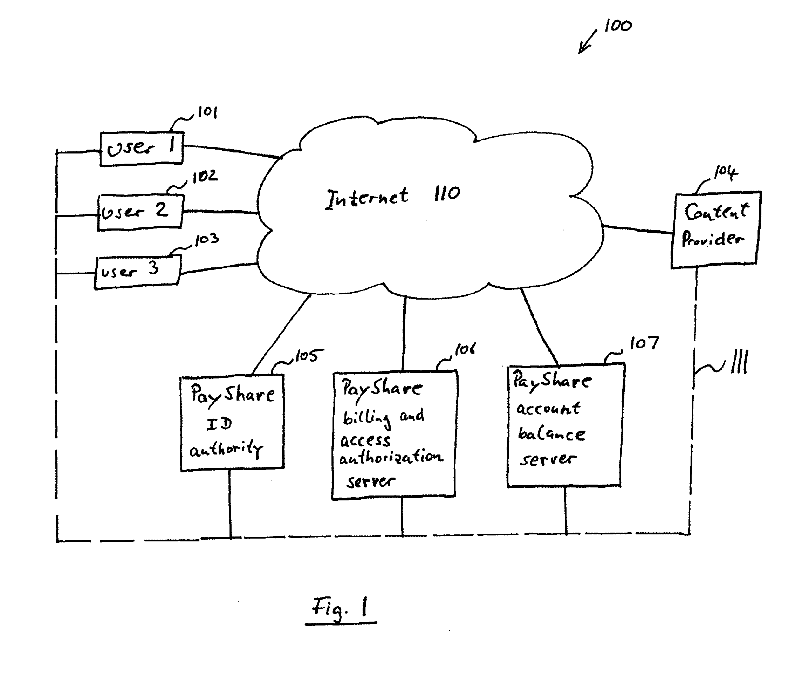

Fig. 1 illustrates an exemplary system according to one embodiment of the present invention. Referring to Fig. 1 three users 101 to 103 are shown representing the plurality of users or consumers among which the digital files are commercially distributed. A content provider 104 provides a digital file to at least one user, say user 101, through a first exchange medium such as the Internet 110. This can as well be initiated and accomplished by user 101 via downloading the respective file from a content provider's server through the Internet. According to another embodiment, a user obtains the digital file using a different medium such as optical discs. As will be discussed in more detail later, a terminal or rendering device in possession of user 101 then requires an authorization to access the content of the obtained file before being able to use its respective content. To enable and authorize user 101 to access and use the content, a fee has to be paid according to the copyright specification of the content owner. In order to pay this fee user 101 performs a transaction with a PayShare billing and access authorization server 106. In this transaction, the user pays the respective fee and in return obtains either a confirmation thereof or any other content access authorization. For this transaction the Internet 110 can be used as the communication media, thus performing an on-line payment transaction similar to on-line banking. In another embodiment, however, the fees can be paid using a distinct second communication media 111 to pay the respective fees before receiving the authorization to access and use the content of the digital file. This second communication media can be, for example, a wired or wireless telephone network. The corresponding fee payment transaction would in this case correspond to a common telephone banking scenario. In a still further embodiment, the payment transaction does not include paying an certain amount of money for instance by using a credit card as conceivable for the aforementioned embodiment, but includes debiting to previously agreed and specified account or includes using a non-monetary accounting scheme which will be transformed to a corresponding amount to be paid or debited at some later point in time.

Having successfully completed the fee payment transaction, user 101 can now use the content of the digital file. In addition, according to the present invention user 101 is now authorized to further distribute this digital file which might involve creating a new copy of that digital file prior to its further redistribution. According to one embodiment of the present invention user 101 may provide a second consumer, namely user 102, with the digital file or the respective copy thereof by using the Internet 110 as a communication media. In general, any other electronic communication media could be employed. According to the present invention, user 1 is then further entitled to a certain share of those fees which have to be paid in connection with the file's content. Therefore, before sending this file or a copy thereof to user 102, user 101 includes one of his identities to the file header identifying user 101 as an entitled recipient of a portion of the associated fees as will be discussed later in more detail. The respective identities are provided by a PayShare ID authority 105 to each participating user, either for free or for small fee. The provision of the identities can be accomplished by means of the communication media 111, the Internet 110 or any other appropriate medium.

Before a user 102 is able to access and use the received file by means of a user terminal or rendering device such as a PC or MP3-Player, again user 102 has to perform the payment and access authorization process as already described for user 101. This paid fee however, is now split between the original content owner or content provider according to a predetermined ratio. According to one embodiment, this ratio is determined by a given percentage as for example user 101 and content provider 104 being each entitled to 50% of that fee. According to another embodiment, the share of user 101 or that of content provider 104 can be a fixed absolute value. According to yet another embodiment a fixed value or a fixed percentage of the fee for the user may vary for different files, types of files, content providers and/or may be based on a consumer record comprising previous transactions of the user. The latter case provides for rewards and incentives for certain users that purchase and further distribute more files than other users or that have reached a certain level of transaction volume and/or distributed files.

According to the present invention user 102 may similarly to user 101 redistribute the obtained digital file and/or a copy thereof. Underlying procedures are the same as discussed for user 101 and will also be described in more detail in subsequent sections.

Fig. 1 further illustrates a PayShare account balance server 107. This server 107 provides for each user to check his account of paid fees and received shares of fees he was entitled to. Each user may therefore access or communicate with the PayShare account balance server 107 via Internet 110, communication media 111 and/or any other appropriate media such as printed account statements sent by mail to each user on a regular basis by the PayShare server. Referring to Fig. 1 it should be noted that the servers 105 to 107 as well as the content provider server 104 or any subset thereof can be integrated as one entity or may even be further divided as several distributed servers in the system 100. This or these server may also be accessed by each user for example through a further server that functions as a gateway or router for these servers.

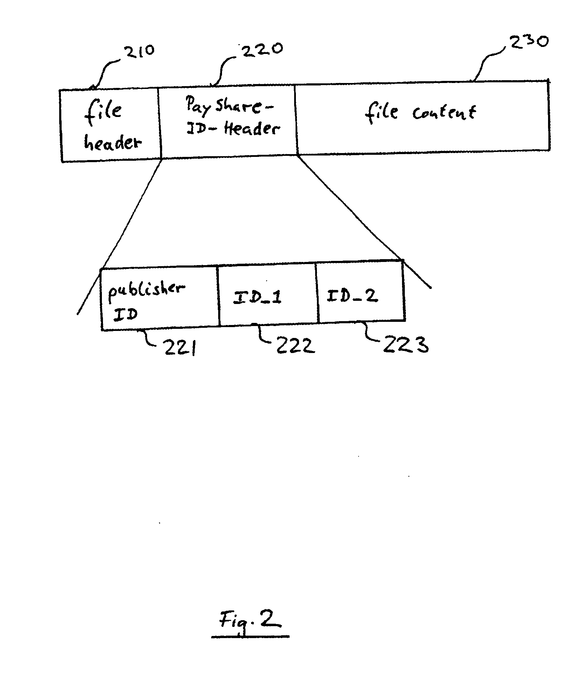

Fig. 2 illustrates the structure of the digital files according to the present invention. A digital file is commonly comprised of different parts like the actual content part 230 and a file header 210. In addition and according to one embodiment of the present invention, a separate PayShare ID header is included in each file. This header part 220 identifies all recipients for the fee that has to be paid when accessing or using the respective file content 230. As illustrated in Fig. 2 this part 220 contains a first section 221 of a publisher ID identifying the content provider or content owner 104 of this file as shown in Fig. 1. The remaining sections 222 and 223 of PayShare ID header 220 specify all users also entitled to receive a share of the paid fee for this file. In this exemplary illustration of Fig. 2, ID_1 and ID_2 refer to user 101 and user 102 of Fig. 1. This implies that both users 101 and 102 have received authorization to use the content 230 and have included their identities to header 220 in order to get a portion of the fee paid by further users, for instance user 103. The establishing of the actual share or total amount of a paid fee for each user and for the content owner that corresponds to publisher ID 221 can be done by the PayShare billing and access authorization server 106 and will be described later in greater detail.

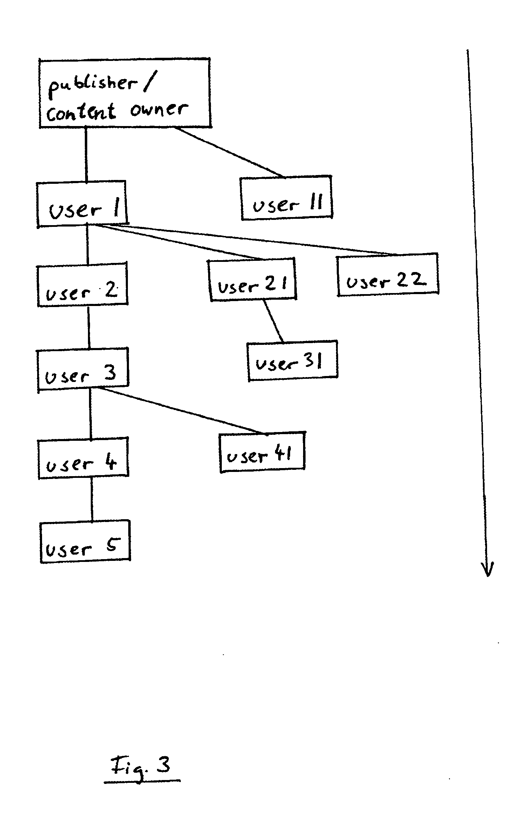

An exemplary scenario of the distribution of one specific digital file is illustrated in Fig. 3. A publisher or content owner initially provides one or more consumers with a digital file as for instance user 1 and user 11. As shown in Fig. 3 user 1 further distributes to this digital file or a copy thereof to the users 21 and 22, whereby now the content owner and user 1 are each entitled to a certain amount of the fees paid by these users 21 and 22. Subsequently user 2 provides user 3,which then provides users 4 and 41, and finally user 4 provides user 5 with a respective copy of the considered digital file. This distribution scenario creates a distribution chain or distribution tree that specifies all users that might be entitled to receive a certain portion of the fees paid for the use of the digital file. If a user pays a fee for an obtained file all users along the direct path from the publisher to this user acted as a distributor of this file and thus are entitled to a portion of that paid fee. For example, the fee paid by user 5 will be split between users 1 to 4 and the content owner. The usage fee paid by user 31 however will be split between user 1, user 21 and the content owner.

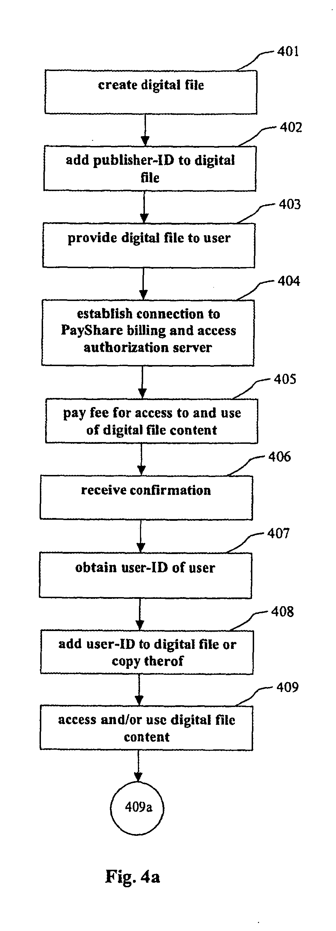

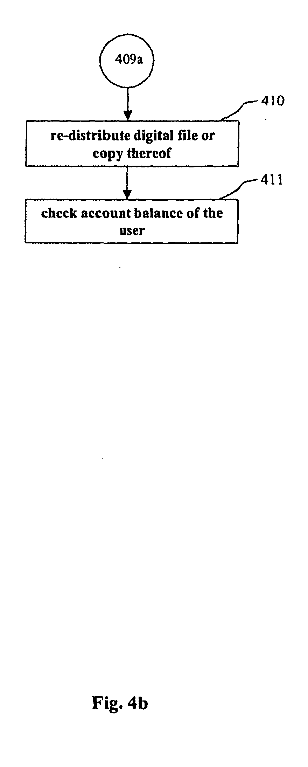

Fig. 4a and 4b are a high level flowchart demonstrating the basic functionality of the present invention. Referring to Fig. 4a, a digital file is created and the publisher ID is added to the PayShare ID header of that digital file. These two steps may be performed as two succeeding steps 401 and 402 as shown in Fig. 4a but can also be combined to a single step of creating or rendering the digital file including its PayShare ID header. According to one embodiment of the invention, these steps are performed by the content provider 104 as shown in Fig. 1. In addition, the content provider also provides the digital file to a user, shown as step 403. This provision step 403 may comprise sending the digital file to the user upon request or enabling the user to obtain the digital file by himself, for example by downloading it from an accessible server or by buying a portable storage media such as a CD. According to one embodiment of the invention the PayShare ID authority 105 provides the content provider 104 with its publisher-ID that is to be included in the file header. For this, both servers may use a trusted and secure connection. According to another embodiment the PayShare ID authority 105 may receive the digital from the content provider 104 and in order to add the respective publisher ID. This scenario could be interpreted as the content provider creating the content and the PayShare ID authority rendering this content to the digital file and thus thereby performing the steps 401 and 402. According to yet another embodiment, the content creator, content provider and PayShare ID authority are comprised in a single entity which consequently performs all aforementioned steps 401 to 403.

Upon having received the digital file, the user establishes a connection to the PayShare billing and access authority server 107 as known from Fig. 1. This step 404 is performed to gain access to the file content, which requires paying a predetermined fee and in return receiving authorization to use the file content. Therefore according to one embodiment of the present invention, a user that attempts to access the received digital file automatically initiates such a connection to PayShare server 107 in order to pay the respective fee. At least the access or rendering device, or a dedicated software running thereon, requests and prompts for the required connection to server 107. This connection can be established via the Internet or another communication media such as the telephone network. The user then pays the fee authorizing him to access and use the digital file content. In return he receives a confirmation thereof. This confirmation might be required and/or entered to access the file content. According to a first embodiment of the present invention the rendering device, which uses the digital file content, recognizes and respects the usage rights of the digital file and in particular recognizes that a fee has to be paid within the described PayShare distribution system. The rendering device, for example a MP3-player, accesses or renders the file content only if it receives a respective authorization, for instance the received confirmation of step 406.

The rendering device may be controlled by specific software adapted to perform or to cause the rendering device to perform all necessary steps. According to another embodiment, the digital file may be encrypted and in particular the file content may be encrypted, whereby the corresponding decryption process requires some information that has to be obtained from PayShare server 107 after the required fee has been paid in step 405. This scenario represents a variety of cases in which the required payment of the fees is enforced by a specific encoding format of the distributed digital file whereby access to and rendering of its content requires further information. In contrast, the first embodiment requires a trusted rendering device that takes care of the compliance to the pending usage rights.

Having paid the respective fees a user is now authorized to access or use a digital file content illustrated by step 409 of Fig. 4a. The user is further authorized to redistribute the digital file to other users. In return, this allows the user to become a recipient of a portion of the fees paid to the redistributed digital file or copies thereof. Therefore, as step 408 in Fig. 4a, a user-ID is added to the file header before the digital file is redistributed. The attached user-ID to the digital file remains comprised in the file header, in particular in the PayShare-ID-header, and ensures that the user will receive his entitled share of all future fees that are paid in connection with this very redistributed digital file. This process will be described later in greater detail. Before redistributing the digital file and before adding the user ID to the file header, the user may create a copy of the received digital file.

The necessary amendment of the file header, in particular of the PayShare-ID-header, is performed by the user terminal, for example the rendering device, according to one embodiment of the invention. This and the fact that the digital files are distributed over insecure distribution media with respect to message integrity and user authentication, requires a method capable of foiling unauthorized adding, deleting or replacing parts or all of the PayShare-ID-header in an attempt to circumvent or defraud the PayShare distribution system. According to one embodiment, in order to include a user ID, additional information is required such as a password that has to be entered by the user. Alternatively, the received confirmation of step 406 or similar second information is obtained for this purpose. The rendering device may prompt for such an information or password on a user display when intending to add a user ID to the file header. According to a second embodiment the PayShare-ID-header may have to be sealed in order to be valid. This sealing may also require additional information such as a password similar to the first embodiment. This approach can be seen as a common digital signature or certifying scheme. Such schemes provide a certain level of message integrity based on the fact that only a signer or certifier possesses secret information which allows him to sign or certify a message, e.g. the PayShare-ID-header for a portion thereof, but allows anyone to verify this signature or certificate. Thus, the integrity of the underlying message can be established.

According to one embodiment of the present invention, the user ID's are created, managed and/or confirmed by the PayShare ID authority 105. This implies that the user has to obtain a user ID before the adding step 408. This can be done once in a separate, initial registration step of a user at the PayShare system. Alternatively, new user ID's can be assigned to each user on a regular basis or even for each digital file. According to one embodiment of the invention, in order to obtain or confirm a user ID, the user and the respective PayShare server establishes a secure and trusted connection. This connection can be established by using a variety of communication media.

Referring to both Figures 4a and 4b, the illustrated flow chart starts respectively as shown in Fig. 4a and continues as shown in Fig. 4b.

The redistribution of the digital file or a respective copy thereof, illustrated as step 410 in Figure 4b, is accomplished similar to step 403 providing the digital file initially to the first user. Consequently the same considerations apply.

Once the digital file or a copy thereof is provided to a further user all previous described steps following step 403 apply to this second user. Furthermore, this procedure can be repeated for may users creating a chain of users each adding their respective user ID to the digital file header and each is entitled to a certain share of all subsequently paid fees. According to one embodiment of the invention, the file header and in particular the PayShare-ID-header varies in length according to the number of user ID's that have been added. According to another embodiment, the file header does not comprise user and publisher ID's but a single identity associated with this particular copy of a digital file. For this, a PayShare server, for instance the PayShare ID authority server 105, assigns a unique identifier each time a user has paid the respective fee for a digital file and consequently intends to redistribute this file. Instead of adding this user ID according to step 408, the assigned unique identifier may be included to the PayShare-ID-header by replacing the current identity. The PayShare ID authority 105 maintains a record of all previous users and the publisher of that digital file and provides this record to the PayShare billing and access authorization server 106 when it has to determine all users entitled to a share of a fee that has been paid for this file. This concept requires a communication between both servers 105 and 106, which might be over a trusted and secured connection and/or communication media. Alternatively, only one of both servers can accomplish all described functions regarding this matter. This embodiment also provides a more robust system against deliberate infringements of malicious users since each time a single, unique and user-independent identifier is comprised in the file header that was assigned by a trusted PayShare server.

Fig. 4b shows a step 411 of checking the account balance of a user. This step comprises connecting to a PayShare account balance server 107 to obtain an account balance statement or an account balance update for this user. These typically lists the fees that have been paid and deducted from his account as well as the fees that are paid into his account corresponding to the share of fees that have been paid to digital files redistributed by this user. Each user may accomplish this optional step 411 at any desired time and independent from the previous described steps.

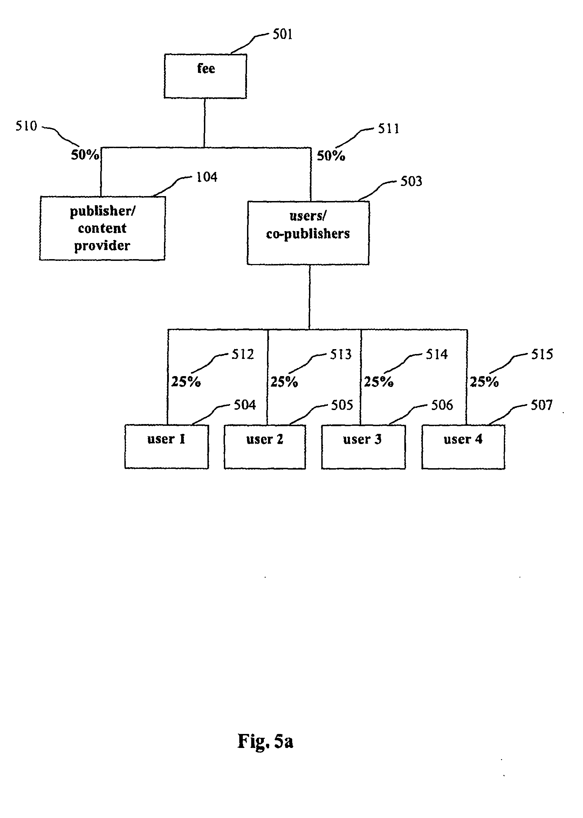

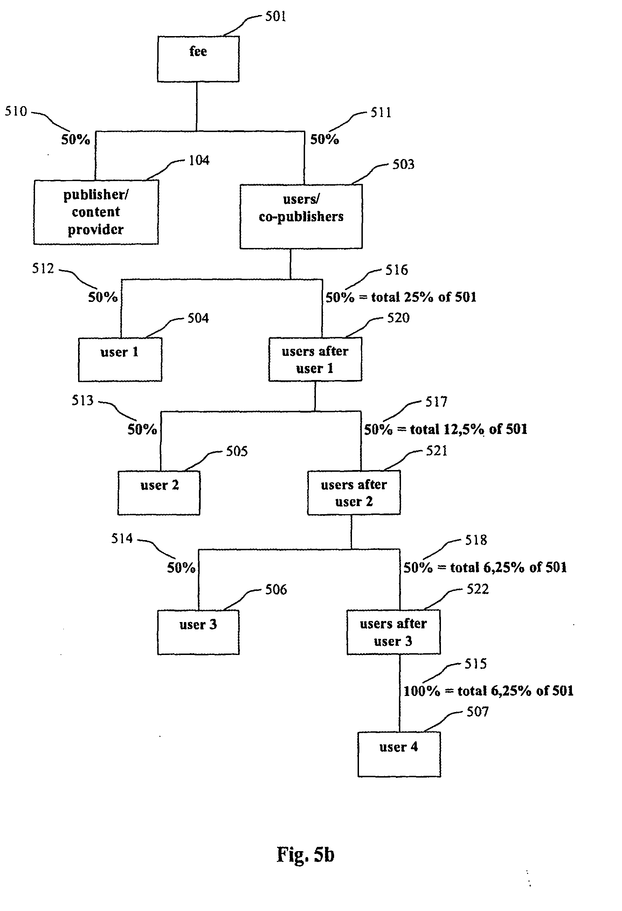

With reference to Figs. 5a and 5b, different embodiments for establishing and assigning the respective share of a paid fee for the publisher and each user associated with the corresponding digital file prior to the payment of this fee are described in the subsequently. Figs. 5a and 5b illustrate a tree structure visualizing the concept of establishing the fee for each user according to different embodiments of the present invention. Fig. 5a shows a fee 501 that has been paid for a specific digital file. This fee is for example paid to the PayShare billing and access authorization server 106. Either this server or any other dedicated server then establishes which user and which publisher are entitled to receive a share of this fee, as well as their respective sizes. In this exemplary embodiment, the PayShare server 106 is assumed to perform these steps. Server 106 therefore extracts the publisher ID and all user ID's included in the PayShare-ID-header as illustrated in Fig. 2. Using the aforementioned embodiment according to which only a single identifier is included in the file header that corresponds to a record comprising all previous users and the publisher ID, this record and/or the respective publisher and user ID's have to be obtained respectively. Having identified all users and the publisher, the share for all of these is established. According to a first embodiment as illustrated in Fig. 5a, the publisher/content owner 104 has been granted a predetermined percentage of the fee 501, which is independent of the number of users 504 to 507. Consequently the publisher or content owner gets a fixed percentage of each fee paid for each copy of a specific digital file. All identified users 504 to 507 have to share the remainder of the fee 501. One option is to divide this share for all users 503 between all users 504 to 507 equally as indicated by Fig. 5a. Thus, the share for each user is not fixed but depends on how many users are also entitled to receive a share through their redistribution. For example, user 1 is assumed to have bought the file in the first place and then provided it to user 2. After user 2 had paid the respective fee, user 1 was entitled to 50% of that fee according to the specified percentage 511 and 510, because user 1 was the only user or co-publisher. However, following the illustrated example including the shown percentages 510 to 514, user 1 is only entitled to one eighth of the fee 501 after finally user 4 further redistributed the corresponding digital file. According to another embodiment, the shown percentages 510 to 515 do not have to be equal for each stage respectively. For instance, the first user may receive a higher percentage 512 as all succeeding users 505 to 507 which paid for a file redistributed by user 1 to these users. This concept that users higher up in the distribution chain are entitled to higher fee portions can be used to induce a desire for each user to redistribute a received file at an early time, in order to receive higher revenue and profit. This is in particular interesting for the content owner since he would also receive a higher revenue in a shorter time period. Further, the shares 510 and 511 may be different in order to better appreciate the role of the content owner. According to a third embodiment, the percentages 510 to 514 may not be fixed but vary according to a time schedule or based on how many users have already redistributed the corresponding copy of the digital file. For instance, the percentage 512 for the respective first user having redistributed the digital file initially may increase as more users are entitled to receive a share of the fee 501 fro each further copy. This may be done to account for the higher level of user 1 in the distribution chain as shown in Fig. 3 and to limit the decrease of his share as more users have redistributed the corresponding digital file. Another way is to decrease the percentage 510 of the publisher's share in order to increase the respective shares for each user according to a time schedule or based upon the number of users. The latter case would increase the desire of the last user having received the digital file to further redistribute the file. A fourth embodiment is illustrated in Fig. 5b. Again the publisher or content owner has been assigned a fixed percentage of the fee 501 and all users at any stage have to share the remaining portion. Again user 1 is assumed to be the first user having redistributed the corresponding digital file. The fee paid by the second user 2 was again divided between user 1 and the publisher 104 according to the percentages 510 and 511. Then successively users 2 to 4 were also entitled to get a respective share of fee 501. According to this embodiment, user 1 receives a share of fee 501 independent of the number of succeeding users who will also be entitled to some portion of the fees paid for the corresponding digital file. As can be seen from Fig. 5b, all succeeding users of user 1 have to share a fixed portion of 520 of fee 501 determined and then fixed by percentages 512 and 516. This is similar to the concept that the publisher 104 receives a fee portion independent of the number of also entitled users for this fee. The same concept can be applied for each new user joining the distribution chain for this particular digital file. Consequently a user higher up in the distribution chain will have no disadvantages when new users further redistribute this digital file since his share will be independent of the number of succeeding users.

The advantage of being higher up in the distribution chain due to larger portions or respective higher percentages of the considered fee 501 is utilized in a fifths embodiment of the present invention. This embodiment employs a controlling mechanism or a controlling means used to control which users are allowed as co-publishers at different stages of the distribution chain. Users higher up in the distribution chain, for instance the first user referred to as user 1 in Fig. 5b, receives the largest portion of all users that may also become co-publishers thereafter, namely users 2 to 4 of Fig. 5b. Thus, it will be desirable for users to redistribute a digital file as this first user. By limiting the total number of first users for a specific digital file a further incentive is given for users to redistribute a digital file (and before that to pay a pending fee themselves) shortly after it has been initially released. By doing this, they would contribute to an effective distribution in a short time period. Alternatively as a sixth embodiment of the invention, certain users might be restricted or explicitly and exclusively allowed to act as the first user. This might be established by means of the user-ID. For instance, being allowed to act exclusively as the first user for some digital files can reward users having reached a certain transaction volume, a certain number of purchased digital files, or a certain number of redistributed digital files. The grantor of this exclusive right may therefore take use of or create and maintain a record of user transactions. This reward serves as a further incentive for users to participate in the system in a manner as desired by the content provider or publisher.

According to the present invention, any combination of the aforementioned embodiments with regard to Figs. 5a and 5b are explicitly considered as a still further embodiment of this invention.

While the invention has been described with respect to the most apparent embodiments constructed in accordance therewith, it will be apparent to those skilled in the art that various modifications, variations and improvements of the present invention may be made in light of the above teachings and within the preview of the appended claims without departing from the spirit and intended scope of the invention. In addition, those areas in which it is believed that those of ordinary skill in the art are familiar, have not been described herein in order to not unnecessarily obscure the invention described herein. Accordingly, it is to be understood that the invention is not to be limited by the specific illustrative embodiments, but only by the scope of the appended claims.

## Claims

1. A system for distributing copyright protected digital files, whereby fees have to be paid for accessing or using said copyright protected digital files, said system comprising:
a plurality of user terminals;
at least one content provider providing a copyright protected digital file to said plurality of user terminals via a network;
a billing server for conducting a fee payment transaction for said fee in connection with the access or use of a copyright protected digital file, whereby a first user terminal or a first user initiates a first fee payment transaction, and whereby said first user terminal or said first user receives authorization to access or use a copyright protected digital file in return for the completion of said first fee payment transaction; whereby
said first user terminal or said first user after having received said authorization to access or use said copyright protected digital file provides said copyright protected digital file to a second of said plurality of user terminals or a second user, whereby
said second user terminal or said second user initiates a second fee payment transaction, and whereby said second user terminal or said second user receives authorization to access or use said copyright protected digital file in return for the completion of said second fee payment transaction, and whereby
in return for said completion of said first fee payment transaction said first user terminal or said first user is entitled to receive a portion of the fee paid by said second user terminal or said second user via said second fee payment transaction.

2. The system as recited in claim 1, wherein said first and second user terminal or said first and second user establishes a connection to said billing server for said fee payment transactions.

3. The system as recited in claim 2, wherein said connection to said billing server is accomplished via said network.

4. The system as recited in claim 2, wherein said connection to said billing server is accomplished via a second communication media.

5. The system as recited in claim 4, wherein said second communication media is a telephone network.

6. The system as recited in claim 1, wherein said providing of said copyright protected digital file by said content provider is accomplished by providing access to said copyright protected digital file for said user terminals via said network.

7. The system as recited in claim 1, wherein said providing of said copyright protected digital file by said content provider is accomplished by sending said digital file via said network to said user terminals.

8. The system as recited in claim 1, wherein said providing of said copyright protected file to said second user terminal or said second user by said first user terminal or said first user comprises prior copying of said copyright protected digital file in order to provide said digital copy as said copyright protected digital file.

9. The system as recited in claim 1, wherein said providing of said copyright protected file to said second user terminal or said second user by said first user terminal or said first user is accomplished by providing access to said copyright protected digital file for said second user terminal via said network.

10. The system as recited in claim 1, wherein said providing of said copyright protected file to said second user terminal or said second user by said first user terminal or said first user is accomplished by sending said copyright protected digital file to said second user terminal by said first user terminal via said network.

11. The system as recited in claim 1, further comprising a account balance server for managing the account balance of each of said plurality of user terminals or users, whereby said account balance comprising the fees that are paid and received for digital files by each of said user terminals or users.

12. The system as recited in claim 11, wherein said account balance server is said billing server.

13. The system as recited in claim 1, wherein a user terminal or a user establishes a connection to said account balance server in order to obtain information on the account balance of said user terminal or said user.

14. The system as recited in claim 1, wherein information is included to a header of said copyright protected digital file for specifying one or more recipients of said fee paid by user terminals or users for accessing or using said copyright protected digital file.

15. The system as recited in claim 14, wherein said information comprises a user ID for each user terminal or for each user entitled to receive a portion of said fee.

16. The system as recited in claim 15, wherein each time a further user terminal or user is entitled to receive a portion of said fee in return for the completion of a payment transaction, the user ID of said further user terminal or user is included to said information comprised in said header.

17. The system as recited in claim 15, wherein said user IDs are at least one of assigned, approved and provided to each user terminal or user by an ID authority server.

18. The system as recited in claim 17, wherein said ID authority server is said billing server.

19. The system as recited in claim 14, wherein said information comprises a publisher ID specifying the copyright owner or publisher as a recipient of at least a portion of said fee.

20. The system as recited in claim 14, whereby said information is an identifier that corresponds to a record comprising said one or more recipients, and wherein each time a further user terminal is entitled to receive a portion of said fee in return for the completion of a payment transaction, said identifier is at least one of altered and replaced.

21. The system as recited in claim 20, wherein said identifier is at least one of assigned, approved and provided by a server, and wherein said altering and said replacing is performed or provided for by said server.

22. The system as recited in claim 21, wherein said server is one of an ID authority server, a billing server, an account balance server or a content provider server.

23. The system as recited in claim 1, wherein said network is the Internet.

24. The system as recited in claim 1, wherein said network is accomplished by portable storage media as the exchange media for said copyright protected digital files.

25. The system as recited in claim 1, wherein said second user terminal or said second user provides said copyright protected digital file to a plurality of further user terminals or users, wherein similar to said first user, said second user is then entitled to a portion of the fees paid by said plurality of further user terminals or users, and whereby each of said plurality of further user terminals or users can then act in the same manner as defined for said second user terminal or said second user.

26. The system as recited in claim 1, wherein said portion of said fee is established by a predetermined scheme.

27. The system as recited in claim 26, wherein said scheme specifies a percentage for the content provider and for all users or user terminals entitled to receive a portions of said fee, whereby said percentage corresponds to the respective portion of said fee.

28. The system as recited in claim 26, wherein said scheme varies according to at least one of different users, different content providers, different copyright protected digital file, records on user transactions and timed schedules.

29. A method for distributing digital files, the method comprising:
providing a digital file of a content provider to a first party, the first party being authorized to access the content of the digital file;
receiving a request from a second party to access a copy of the digital file, the copy of the digital file having been provided to the second party by the first party; and
upon receiving an indication that the second party has authorized payment for access to the copy of the digital file,
authorizing the second party to access the copy of the digital file; and
allocating to the first party a portion of the payment authorized by the second party to access the copy of the digital file.

30. The method of claim 29 wherein the copy of the digital file provided to the second party by the first party includes an identifier of the first party so that a portion of the payment can be allocated to the first party.

31. The method of claim 29 wherein the digital file includes a unique identifier and including maintaining a mapping of an identifier of the first party to the unique identifier of the digital file so that when the second party requests access to the copy of the digital file the first party can be identified from the unique identifier of the digital file.

32. The method of claim 29 wherein the providing of the digital file to the first party includes authorizing the first party to access the digital file and receiving an indication that the first party has authorized payment for access to the digital file.

33. The method of claim 29 including, upon receiving an indication that the second party has authorized payment for access to the copy of the digital file, allocating to the content provider a portion of the payment authorized by the second party to access the copy of the digital file.

34. The method of claim 29 wherein a party is user.

35. The method of claim 29 wherein a party is a user terminal.

36. The method of claim 29 including:
receiving a request from a third party to access a another copy of the digital file, the other copy of the digital file having been provided to the third party by the second party; and
upon receiving an indication that the third party has authorized payment for access to the other copy of the digital file,
authorizing the third party to access the other copy of the digital file; and
allocating to the first party or the second party a portion of the payment authorized by the third party to access the other copy of the digital file.

37. The method of claim 36 wherein a portion of the payment authorized by the third party to access the other copy of the digital file is allocated to both the first and the second party.

38. The method of claim 36 wherein a portion of the payment authorized by the third party to access the other copy of the digital file is allocated only to the second party.

39. The method of claim 29 wherein the allocating includes crediting an account of the first party.

40. The method of claim 29 wherein the digital file includes an identifier of the content provider.

41. The method of claim 29 wherein the allocating is based on a percentage of the payment to be allocated to the content provider and a percentage of the payment to be distributed among parties who have provided a copy of the digital file to other parties.

42. The method of claim 29 wherein the allocating is based on a scheme that can vary based on one or more of the parties, the content provider, content of the digital file, and time schedules.

43. A method for distributing digital files, the method comprising:
receiving by a first party a digital file of a content provider, the first party being authorized to distribute a copy the digital file to a second party;
providing by the first party to a second party a copy of the digital file; and
receiving by the first party an indication of an allocation to the first party of a portion of a payment authorized by the second party to access the copy of the digital file wherein the second party is authorized to access a copy of the digital file to a third party and will receive a portion of payment authorized by the third party to access the copy of the digital file.

44. The method of claim 43 wherein the copy of the digital file provided to the second party by the first party includes an identifier of the first party so that a portion of the payment can be allocated to the first party.

45. The method of claim 43 wherein the digital file includes a unique identifier and wherein a mapping of an identifier of the first party to the unique identifier of the digital file is maintained by a server so that when the second party requests access to the copy of the digital file the first party can be identified from the unique identifier of the digital file.

46. The method of claim 43 wherein the first party is authorized to access the digital file and has authorized payment for access to the digital file.

47. The method of claim 43 the content provider is allocated a portion of the payment authorized by a party.

48. The method of claim 43 wherein a party is user.

49. The method of claim 43 wherein a party is a user terminal.

50. The method of claim 43 wherein the digital file includes an identifier of the content provider.

51. The method of claim 43 wherein the allocating is based on a percentage of the payment to be allocated to the content provider and a percentage of the payment to be distributed among parties who have provided a copy of the digital file to other parties.

52. The method of claim 43 wherein the allocating is based on a scheme that can vary based on one or more of the parties, the content provider, content of the digital file, and time schedules.
